(19) Europäisches Patentamt
European Patent Office
Office européen des brevets

(11) Publication number: **0 111 986**
**B1**

(12) **EUROPEAN PATENT SPECIFICATION**

(45) Date of publication of patent specification: **04.02.87**

(51) Int. Cl.$^4$: **C 08 G 81/00,** C 08 G 59/42, C 09 D 3/58, C 09 D 3/64

(21) Application number: **83201824.6**

(22) Date of filing: **21.12.83**

(54) **Pigment-containing liquid coating composition.**

(30) Priority: **23.12.82 NL 8204960**

(43) Date of publication of application:
**27.06.84 Bulletin 84/26**

(45) Publication of the grant of the patent:
**04.02.87 Bulletin 87/06**

(84) Designated Contracting States:
**AT BE CH DE FR GB IT LI NL SE**

(56) References cited:
**GB-A- 872 254**
**JP-A-78 090 334**
**US-A-4 129 488**
**US-A-4 255 553**

(73) Proprietor: **AKZO N.V.**
**Velperweg 76**
**NL-6824 BM Arnhem (NL)**

(72) Inventor: **Nota, Gabriel Henri Auguste**
**36, Rue Victor Hugo**
**F-60500 Chantilly (FR)**
Inventor: **Penninck, Didier Emile**
**4, Grande Rue Soutraine par Cauffry**
**F-60290 Rantigny (FR)**
Inventor: **van Oosterwijck, Maurice Francois**
**70, Cité Jean Biondi**
**F-60160 Montataire (FR)**
Inventor: **Toth, Anton**
**10, Rue Becquerel**
**F-60100 Creil (FR)**

(74) Representative: **Sieders, René et al**
**P.O. Box 314**
**NL-6800 AH Arnhem (NL)**

**EP 0 111 986 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a pigment-containing, liquid coating composition based on a polymer as binder.

British Patent Specification No. 872 254 relates to a heat-hardenable resin built up from the starting compounds for a terephthalic or isophthalic polyester and from an epoxy group-containing polyether derivative of a polyphenol as coating composition for the insulation of electric conductors. As for this use the coating to be formed must not be porous, the coating composition does not contain any pigment. Further, the resin is prepared either by first transesterifying an isophthalic or terephthalic acid with a polyvalent alcohol, resulting in a polyester with hydroxyl and, possibly, ester endgroups, and subsequently reacting the polyester with the epoxy compound, or by simultaneously reacting the 3 starting compounds with each other. Regardless of the method of preparation, however, there will never be formed a block copolymer based on a carboxylic polyester and an epoxy compound.

The coating composition according to the invention is characterized in that the binder is a block copolymer of the formula $A—(B—A)_m$ or $B—(A—B)_n$, wherein m and n are numbers between 1 and 20, which block copolymer is built up of one or more blocks A of a carboxylic polyester resin from terephthalic acid and/or isophthalic acid, a branched or non-branched dihydroxy compound having 2—8 carbon atoms and optionally a tri- or poly-functional hydroxy compound and/or a tri- or polyfunctional carboxyl compound in an amount not higher than 10 mole %, based on the total amount of hydroxy or carboxyl compounds polymerized by condensation, said polyester resin having an acid number of 10—140 and a number average molecular weight of 800—10 000, and of one or more blocks B of an epoxy resin having an epoxy functionality of 1,5—2,5 and an epoxy equivalent weight of 100—2000, the composition also containing a curing agent for the hydroxyl group-containing block copolymer, said curing agent being a blocked or non-blocked isocyanurate compound, a blocked or non-blocked aliphatic, cycloaliphatic or aromatic di-, tri- or polyvalent isocyanate, an aminoplast and/or a phenol resin.

The carboxylic polyester resin is prepared by polycondensation of terephthalic acid and/or isophthalic acid and a branched or non-branched dihydroxy compound having 2—8 carbon atoms. Examples of suitable dihydroxy compounds include ethylene glycol, 1,2-propylene glycol, 1,3-propylene glycol, neopentyl glycol, 1,2-butane diol, 1,3-butane diol, 1,4-butane diol, 1,5-pentane diol, 1,6-hexane diol, cyclohexane-1,4-dimethanol, diethylene glycol or triethylene glycol, or mixtures of two or more of the above-envisaged compounds.

For the degree of branching of the carboxylic polyester resin to be sufficiently low it should also be built up from a tri- or polyfunctional hydroxy compound and/or a tri- or polyfunctional carboxyl compound in an amount not higher than 10 mole %, preferably not higher than 8 mole %, based on the total amount of hydroxy or carboxy compounds polymerized by condensation.

In the preparation of the polyester resin use may optionally be made of derivatives of the hydroxyl or carboxyl compound(s), such as epoxy compounds, acid chlorides or acid anhydrides.

The polycondensation reaction for the preparation of the carboxylic polyester resin is generally carried out at a temperature of 140°—300°C, preferably 180°—260°C, and in an inert atmosphere of, for instance, nitrogen and/or carbon dioxide. The water evolved in the polycondensation reaction may be removed in a usual manner, for instance by distillation under reduced pressure or by azeotropic distillation with the aid of an organic solvent, for instance toluene or xylene. After termination of the polycondensation these solvents may optionally be removed from the polyester resin by distillation.

The polycondensation reaction is continued until the polyester resin has the desired acid number of 10—140, preferably 20—110. The hydroxyl number of the polyester resin is preferably not higher than 2, more particularly 0—0,8. The acid number and the hydroxyl number are expressed in mg KOH per g of polyester resin. The polycondensation mixture may optionally contain an esterification catalyst, for instance: sulphuric acid, p-toluene sulphonic acid, benzene sulphonic acid, naphthalene sulphonic acid, a sulphonic acid cation exchanger or a metal compound, for instance: dibutyl-tin dilaurate or lead acetate, preferably dibutyltin oxide. According to the invention the number average molecular weight of the polyester resin is 800—10 000, preferably 1000—6000.

The epoxy resin which is suitable for use in the polyester epoxy block copolymer has an epoxy functionality of 1,5—2,5, preferably 1,8—2,2, and an epoxy equivalent weight of 100—2000.

Examples of suitable solid or liquid epoxy resins include glycidyl groups-containing resins such as polyacrylic resins, polyesters, polyethers or polyurethanes which all contain one or more glycidyl groups per molecule. Optionally, the epoxy resin may be used as solution in a suitable solvent. The epoxy resin to be used is preferably a compound of the following general formula:

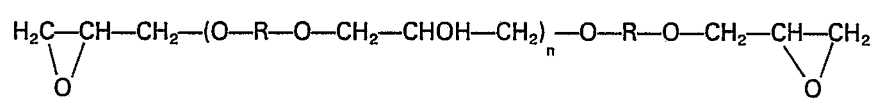

wherein R represents an aliphatic, cycloaliphatic or aromatic group preferably containing 2—18 carbon atoms and n is a number in the range of from 0 to 50, preferably 0 to 10, or an adduct thereof with a (cyclo)aliphatic or heterocyclic diamine, preferably a di-secondary amine, such as piperazine. Examples of

such epoxy resins include the glycidyl ethers of, say, ethylene glycol, diethylene glycol, triethylene glycol, 1,2-propylene glycol, 1,3-propylene glycol, 1,5-pentane diol, bis-(4-hydroxycyclohexyl)-2,2-propane, 4,4'-dihydroxybenzophenone, bis-(4-hydroxyphenyl)methane, bis(4-hydroxyphenyl)-1,1-ethane, bis-(4-hydroxyphenyl)-1,1-isobutane and 1,5-dihydroxynaphthalene.

If desired, use may be made of polyglycidyl ethers of compounds such as glycerol or 1,2,6-hexane triol. More particularly, it is preferred that use should be made of a diglycidyl ether based on bis-(4-hydroxyphenyl)-2,2-propane. Use also may be made of mixtures of epoxy resins. The epoxy equivalent weight of the epoxy resin(s) is preferably in the range of from 100—700, more particularly of from 100 to 500. The epoxy resin preferably has a number average molecular weight in the range of from 150 to 1250.

The block copolymer may be prepared in any convenient manner by reaction of the carboxylic polyester resin with the epoxy resin. The block copolymer may optionally be prepared by using two or more carboxylic polyester resins and/or epoxy resins. A suitable procedure for instance consists in stepwise addition of the epoxy resin(s) to a solution of the polyester resin(s) and heating the mixture to a temperature generally in the range of from 85 to 195°C, preferably 100° to 180°C. For such an addition reaction the reaction mixture may, if required, be made to contain a catalyst known in itself, for instance a tertiary amine such as benzyl dimethylamine, benzyl triphenyl phosphonium chloride, benzyl trimethyl ammonium methoxide, or a metal compound, for instance zirconium octoate. A preferred solvent for the polyester resin and for the block copolymer on which it is based is an aromatic hydrocarbon such as toluene, xylene or a mixture of aromatic hydrocarbons having a boiling point of, for instance, 140°—160°C. To the block copolymer obtained on conclusion of the reaction there may be added a polar solvent, for instance: isophoron, methylethyl ketone, diacetone alcohol, the ethyl ether of ethylene glycol and the ethyl ether of ethylene glycol acetate.

The weight ratio of the carboxylic polyester resin to the epoxy resin is generally so chosen that at the start of the reaction to form the block copolymer the reaction mixture contains 1,2—2,0 moles of epoxy, preferably 0,7—1,3 moles of epoxy of the epoxy resin per mole of carboxyl of the polyester resin. Thus, a block copolymer having carboxyl and/or epoxy end groups is obtained. The block copolymer is preferably built up of 3—11 blocks A and 2—10 blocks B (where m=2—10) or of 2—10 blocks A and 3—11 blocks B (where n=2—10).

According to the invention the number average molecular weight of the block copolymer is in the range of 3000 to 20 000, preferably 5000 to 18 000. The acid number of the block copolymer is preferably not higher than 15, and more particularly in the range of from 0 to 10.

The block copolymer is generally applied as binder in a baking or non-baking coating composition which serves as a finishing coat or as primer coat. Intermediate coat or top coat in a multilayer paint system for metals, for instance in coil coating, and in can coating for the inside of the cans, as shop primer, as a zinc-rich paint or as physically drying primer. As examples of suitable substrates may be mentioned wood, elastomers and reinforced or non-reinforced synthetic materials such as polyesters, polycarbonates, polyvinyl chloride, poly(meth)acrylates, polyamides, polypropylene, polystyrene, acrylonitrile-butadiene styrene resins and unsaturated polyesters.

The bakable coating composition according to the invention also contains a curing agent for the hydroxyl groups-containing block copolymer. Suitable curing agents are blocked or non-blocked isocyanurate compounds or blocked or non-blocked aliphatic, cycloaliphatic or aromatic di-, tri- or polyvalent isocyanates. Examples of suitable isocyanates include hexamethylene diisocyanate, 2,2,4-trimethyl-1,6-hexane diisocyanate, cyclohexyl-1,4-diisocyanate, isophoron diisocyanate, the adduct of 1 molecule of 1,4-butane diol and 2 molecules of isophorondiisocyanate, the adduct of 1 molecule of 1,4-butane diol and 2 molecules of hexamethylene diisocyanate, dicyclohexylmethane-4,4'-diisocyanate, xylylene diisocyanate, 1,3,5-trimethyl-2,4-bis(isocyanatomethyl)benzene, toluene diisocyanate, diphenylmethane-4,4'-diisocyanate, the adduct of 3 molecules of hexamethylene diisocyanate and 1 molecule of water, the adduct of 1 molecule of trimethylol propane and 3 molecules of isophoron diisocyanate, the adduct of 1 molecule of trimethylol propane and 3 molecules toluene diisocyanate and the adduct of 1 molecule of pentaerythritol and 4 molecules hexamethylene diisocyanate. For blocking the isocyanate or isocyanurate compound, if required, use may be made of any conventional or suitable blocking agent.

Instead of or in addition to the above-described curing agents other suitable agents that may be used are, for instance, N-methylol groups- and/or N-methylol ether groups-containing aminoplasts obtained by reaction of an aldehyde, such as formaldehyde, with an amino groups- or amido groups-containing compound, such as melamine, urea, N-N'-ethylene urea, dicyandiamide and benzoguanamine; for the preparation of these compounds see for example Houben-Weyl, Methoden der organischen Chemie; Vol. 14/2, pp. 319—371 (1963). It is preferred that these compounds should entirely or partly be etherified with alcohols having 1 to 6 carbon atoms, for instance with methanol, ethanol, n-propanol, isopropanol, n-butanol, isobutanol, amyl alcohol, hexanol or mixtures of the above-envisaged alcohols. More particularly, use is made of a methylol melamine having 4 to 6 methylol groups per molecule of melamine, with at least 3 methylol groups being etherified with methanol, ethanol, a propanol or with a butanol, or a butanol-etherified condensation product of formaldehyde and N,N'-ethylene diurea. More particularly, use is made of a hexaalkoxymethyl melamine, with the alkoxy group containing 1 to 4 carbon atoms. As example of other suitable curing agents may be mentioned phenol resins.

The curing agent is present in the coating composition in an amount such that the molar ratio of the reactive groups of the curing agent to that of the hydroxyl groups-containing block copolymer is in the range of from 0,1 to 1,7, preferably 0,2 to 1,5.

Optionally and depending on the field of application envisaged, the coating composition may contain one or more dyes and usual adjuvants and additives, for instance: pigment dispersing agents, antisag agents, agents influencing the rheological properties, corrosion inhibiting compounds, for instance: metallic zinc or metallic aluminium, plasticizers, gloss improving agents and curing accelerators, such as p-toluene sulphonic acid or blocked products of such accelerators. The coating composition according to the invention may optionally contain a solid, powdered polymer, such as polyethylene, polypropylene, polyvinyl chloride, polyvinylidene fluoride, polycarbonate, polyester, polyacrylate, ABS-resin and polyamide. Suitable polyamides include the polymers built up from one or more ω-aminomonocarboxylic acids having 6—12 carbon atoms per molecule, or the lactam thereof, for instance: polycaprolactam (nylon-6), the polymer of ω-aminoundecanoic acid (nylon 11), and polylauryl lactam (nylon 12), or the copolymers of, say, caprolactam and ω-aminoundecanoic acid (nylon 6/11), caprolactam and lauryl lactam (nylon 6/12) and those of caprolactam, ω-aminoundecanoic acid and lauryl lactam (nylon 6/11/12). Other suitable polyamides are the polycondensation products of a diamine, such as hexamethylene diamine, and a dicarboxylic acid, such as adipic acid, sebacic acid, dodecanedicarboxylic acid and terephthalic acid. As representative examples of such polyamides may be mentioned poly(hexamethylene adipamide) [nylon 6.6], poly(hexamethylene sebacic diamide) [nylon 6.10] and poly(hexamethylene dodecane dicarboxylic diamide) [nylon 6.12]. It is preferred that use should be made of polylauryl lactam. It is preferred that the solid, powdered polymer or mixture of these polymers should have a softening point of 110°—230°C.

As examples of suitable pigments may be mentioned the usual types, viz. acid, neutral or basic pigments, which may be organic or inorganic. The pigments may optionally be pretreated to modify their properties. Examples of suitable pigments include titanium dioxide, red iron oxide, lead chromate, carbon black and phthalocyanin pigments. The term pigments as used herein also refers to metallic pigments, such as aluminium and stainless steel. The weight ratio of pigment to the block copolymer and the curing agent is generally in the range of 0,05 to 19, the higher ratios being used for generally metal-rich compositions, which are weldable if they contain a metal as pigment or corrosion inhibiting compound.

The coating composition may be applied to the substrate in any convenient manner, for instance by roller coating or (electrostatic) spraying. The substrate to be coated is generally of a pretreated or non-pretreated metal or alloy, such as iron, galvanized iron, steel, sheet metal or aluminium. The composition may be cured or baked in the usual manner. In the coil coating process baking is to be carried out at a usually applied final temperature of the substrate of about 200°—280°C; that temperature is normally only reached by contacting the coated substrate for a short time (for instance 10—90 seconds) with air or combustion gases at a temperature of 250°—400°C. Application and baking conditions during coil coating are known to a man skilled in the art and need not be further described here. Suitable baking temperatures for other fields of application are, for example, 120°—210°C. Upon application of physically drying coating compositions or of the block copolymer according to the invention as such, curing generally does not take place at essentially elevated temperature.

Examples

In the Examples use was made of the carboxylic polyester resins (A—F) obtained by polycondensation of the compounds mentioned in Table 1 in the amounts specified therein (expressed as parts by weight). The table also gives a few parameters of the polyester resins prepared. The polycondensation was carried out at a temperature of 240°—260°C in the presence of 3% by weight of xylene (based on the total polycondensation mixture). The polycondensation was continued until the polyester resin had the desired acid number. As esterification catalysts were used dibutyltin oxide (polyesters A, B, D and F) and tributyltin oxide (polyesters C and E). The polyester resins all have a hydroxyl number of 0 and show no crystallinity.

TABLE 1

| Constituents | Polyester resins | | | | | |
|---|---|---|---|---|---|---|
| | A | B | C | D | E | F |
| 1,2-propane diol | 26,828 | — | — | — | — | 9,027 |
| 1,5-pentane diol | — | — | 37,598 | 35,245 | 33,275 | — |
| 1,6-hexane diol | — | 39,527 | — | — | — | 28,079 |
| 1,1,1-trimethylol propane | — | — | — | 0,460 | 2,250 | — |
| isophthalic acid | 73,072 | — | 31,151 | 64,285 | 64,465 | 62,585 |
| terephthalic acid | — | 60,373 | 31,151 | — | — | — |
| trimellitic anhydride | — | — | — | — | — | 0,209 |
| Properties | | | | | | |
| acid number | 112 | 37 | 19 | 56 | 56 | 29 |
| carboxyl functionality | 2,0 | 2,0 | 2,0 | 2,08 | 2,48 | 2,05 |
| number average molecular weight | 1000 | 3000 | 6000 | 2081 | 2475 | 4000 |

The polyester epoxy block copolymers 1—9 used in the examples were prepared upon addition of the epoxy resins in the amounts (expressed as parts by weight in Table 2) to solutions of the polyester resins mentioned in Table 2, which also gives the amounts of solid matter thereof (expressed as parts by weight). The epoxy resin A is a diglycidyl ether of Bisphenol A and has an epoxy equivalent weight of 170 (available under the registered trade mark Epikote 828 of Shell). The epoxy resin B is a diglycidyl ether of Bisphenol A and has an epoxy equivalent weight of 454 (available under the registered trade mark Epikote 1001 of Shell). The epoxy resin C is a diglycidyl ether of 1,4-butane diol and has an epoxy equivalent weight of 101. The epoxy resin D is an adduct of 2 moles of epoxy resin A and 1 mole of piperazine. The polyester resins were all dissolved in 51,5 parts by weight of an aromatic hydrocarbon (available under the registered trade mark Solvesso 100 of Esso). Subsequently, 0,1 part by weight of benzyl dimethylamine was added to each of the solutions and the reaction mixtures were kept at a temperature of 150°C until the block copolymer formed had the acid number mentioned in Table 2.

Table 2 also gives a few parameters of the polyester epoxy block copolymers prepared.

TABLE 2

| | | Polyester epoxy block copolymers | | | | | | | | |
|---|---|---|---|---|---|---|---|---|---|---|
| | | 1 | 2 | 3 | 4 | 5 | 6 | 7 | 8 | 9 |
| Polyester resin | Type | A | A | B | B | C | C | D | E | F |
| | Proportion | 28,231 | 77,054 | 79,829 | 76,370 | 85,640 | 92,737 | 61,598 | 58,741 | 75,744 |
| Epoxy resin A | | 71,669 | 8,676 | — | — | — | 2,955 | — | — | — |
| Epoxy resin B | | — | 3,861 | 20,071 | — | 14,260 | 4,208 | 38,302 | 41,159 | 24,156 |
| Epoxy resin C | | — | 10,309 | — | — | — | — | — | — | — |
| Epoxy resin D | | — | — | — | 23,530 | — | — | — | — | — |
| Properties | | | | | | | | | | |
| Acid number | | 3 | 4,5 | 7 | 1 | 2 | 4 | 0,5 | 0,5 | 0,4 |
| Carboxyl functionality | | 0,32 | 0,68 | 1,54 | 0,34 | 0,71 | 1,43 | 0,11 | 0,11 | 0,13 |
| Hydroxyl number | | 108,5 | 104 | 52 | 29 | 39 | 22 | 90 | 93 | 57 |
| Hydroxyl functionality | | 11,60 | 15,75 | 11,08 | 9,68 | 13,85 | 7,76 | 19,36 | 19,91 | 17,80 |
| Number average molecular weight | | 6000 | 8500 | 12 000 | 19 000 | 20 000 | 20 000 | 12 000 | 12 000 | 17 500 |

To the solutions of the polyester epoxy block copolymers thus prepared there were added ethyl ether of ethylene glycol and previously used aromatic hydrocarbon in amounts such that solutions were obtained having a solids content of 40% by weight of the block copolymer in a mixture of equal parts by weight of the two solvents.

Examples 1—4

To obtain the coating compositions used in the Examples 1—4 the correspondingly numbered polyester epoxy block copolymers in the amounts mentioned in Table 3 (in parts by weight of solid matter) and in the form of the previously described solutions were homogeneously mixed with the other components given in Table 3 in the amounts also mentioned therein (in parts by weight). The hydrogenated castor oil was used as a 40% by weight solution in xylene (the amount mentioned in Table 3 is expressed in parts by weight of solids).

As curing agents there were used, respectively, tris(p-isocyanatophenyl) methane (available under the registered trade mark Desmodur VL of Bayer) blocked with benzyl methacryloyl hydroxamate (Example 1), the adduct of 1 mole of 1,1,1-trimethylol propane and 3 moles of toluene diisocyanate (available under the registered trade mark Desmodur L of Bayer) blocked with caprolactam (Example 2), a phenol-blocked polyisocyanate which is the isocyanurate from 3 moles of toluene diisocyanate (available under the registered trade mark Desmodur CT of Bayer; Example 3) and the adduct of 3 moles of hexamethylene diisocyanate and 1 mole of water (available under the registered trade mark Desmodur N of Bayer) blocked with methylethyl ketoxime (Example 4).

TABLE 3

| Components | Examples 1 | 2 | 3 | 4 |
|---|---|---|---|---|
| Polyester epoxy block copolymers | 43 | 48 | 50 | 19 |
| Hydrogenated castor oil | — | — | — | 1,2 |
| Rutile-titanium dioxide | 20 | 7 | 10 | — |
| Zinc dust | — | — | — | 53 |
| Strontium chromate | — | — | 5 | — |
| Zinc chromate | — | 4 | — | — |
| Curing agent | 4 | 4,5 | 7 | 1,5 |
| Ethyl ether of ethylene glycol acetate | 17 | 10 | 5 | 2,5 |
| Aromatic hydrocarbon | 17 | 14,5 | 15 | 12,5 |
| Methylethyl ketone | — | 4,5 | — | — |
| Cyclohexanone | — | — | — | 10 |

The baking coating compositions obtained were applied by roller coating to panels of the metals mentioned in Table 4 in a thickness (in the cured state) also given therein and cured by keeping the panels in an oven for 25—35 seconds at a temperature of 300°—400°C, so that the maximum temperature of the panels was 240°C.

In the examples the flexibility is measured in accordance with the T-bend test of the European Coil Coating Association and expressed in ratings, T0, T1, T2, etc., a value of T0 denoting excellent flexibility and a value of T4 good flexibility. The impact resistance is determined on the back of test panels in accordance with Gardner, use being made of a weight of 1800 g and the results being expressed in N . cm. Further, the resistance to organic solvents is denoted by the number of times a wad saturated with methylisobutyl ketone (Examples 1 and 2) or methylethyl ketone (Examples 3 and 4) had to be rubbed to and fro over the cured coating for complete removal thereof. The adhesion of the coating was determined in accordance with DIN 53151; it was excellent in all cases.

TABLE 4

| | Examples 1 | 2 | 3 | 4 |
|---|---|---|---|---|
| Coating thickness (in µm) | 5 | 5 | 5 | 13 |
| Metal substrate | aluminium | steel | galvanized steel | aluminium |
| Flexibility | T0 | T0,5 | T1 | T1,5 |
| Impact strength | 1040 | 1820 | 2080 | 2080 |
| Resistance to organic solvents | 40 | 50 | 30 | 10 |

Examples 5—8

To obtain the coating compositions applied in the Examples 5—8 the correspondingly numbered polyester epoxy block copolymers in the amounts mentioned in Table 5 (in parts by weight of solid matter) and in the form of the previously described solutions were homogeneously mixed with the other components given in Table 5 in the amounts also mentioned therein (in parts by weight).

The hydrogenated castor oil was used as a 40% by weight solution in xylene (the amounts mentioned in Table 5 are expressed in parts by weight of solid matter).

As curing agents there were used, respectively, the adduct of 1 mole of 1,1,1-trimethylol propane and 3 moles of toluene diisocyanate (available under the registered trade mark Desmodur L of Bayer; Example 5), the adduct of 3 moles of hexamethylene diisocyanate avd 1 mole of water (available under the registered trade mark Desmodur N of Bayer; Example 6) and tris(p-isocyanatophenyl)methane (available under the registered trade mark Desmodur VL of Bayer; Example 7).

TABLE 5

| Components | Examples | | | |
|---|---|---|---|---|
| | 5 | 6 | 7 | 8 |
| Polyester-epoxy block copolymer | 17 | 53 | 52 | 24 |
| Hydrogenated castor oil | 1 | — | — | 1,5 |
| Red iron oxide | — | 20 | 21 | — |
| Strontium chromate | — | — | 2 | — |
| Zinc chromate | — | — | 2 | — |
| Zinc tetrahydroxy chromate | — | 5 | — | — |
| Zinc dust | 55 | — | — | 56 |
| Curing agent | 2,6 | 5,0 | 7,0 | — |
| Aromatic hydrocarbon | — | 5 | 2 | — |
| Methylethyl ketone | 12 | 5 | 3 | |
| Xylene | 12 | — | 3 | 9 |
| Cyclohexanone | — | 2 | — | 9 |

The resulting coating compositions were applied to steel panels in the coating thicknesses (in the cured state) mentioned in Table 6 and cured at ambient temperature.

In the Examples 5—8 the flexibility is denoted by the Erichsen indentation value measured in accordance with DIN 53156 and expressed in mm. The resistance to deformation (measured at the front of the test panel) is denoted by the maximum height of fall of a weight of 1 kg withstood by the coating without evidence of cracking, measured in accordance with French standard NF T30—039. The adhesion of the coating was determined in accordance with DIN 53151; it was excellent in all cases. Further, the coatings displayed excellent weather resistance upon a six months' exposure to a marine environment.

TABLE 6

| | Examples | | | |
|---|---|---|---|---|
| | 5 | 6 | 7 | 8 |
| Coating thickness (in μm) | 18 | 20 | 20 | 18 |
| Indentation value | 6 | 9 | 8 | 5 |
| Resistance to deformation | 40 | 50 | 40 | 30 |

Example 9

A coating composition was prepared by homogeneously intermixing 54,0 parts by weight of the 40% by weight solution of polyester epoxy block copolymer 9, and 9,5 parts by weight of a formaldehyde benzoguanamine resin as curing agent, 0,6 parts by weight of a 20% by weight solution in isopropanol of

morpholine-blocked p-toluene sulphonic acid and 35,4 parts by weight of a mixture of equal parts by weight of methylethyl ketone and an aromatic hydrocarbon (available under the registered trade mark Solvesso 100 of Esso).

The coating composition obtained was applied to an aluminium panel in a thickness of 10 µm (in the cured state) and cured for 4 minutes in an oven at a temperature of 280°C. The coating applied was very flexible and did not show any change upon contact for over 200 hours at 45°C with aqueous ammonia having a strength of 22° Baumé.

Examples 10 and 11

To obtain the coating compositions used in these examples 14,8 parts by weight of the polyester epoxy block copolymers 2 (Example 10) and 3 (Example 3) in the form of the previously described 40%-by weight solutions were homogeneously mixed with the components given in Table 7 in the amounts mentioned therein (in parts by weight).

Use was made of the same curing agent as employed in Example 2. The polyvinylidene fluoride powder applied is marketed by Hoechst under the registered trade mark Vidar. The polyamide powder, which contains 25% by weight of titanium dioxide, is marketed by ATO Chimie under the registered trade mark Orgasol 2003. The aromatic hydrocarbon is marketed by Esso under the registered trade mark Solvesso 200.

TABLE 7

| | Example | |
|---|---|---|
| | 10 | 11 |
| Rutile titanium dioxide | 14 | 10 |
| Strontium chromate | 1 | 3 |
| Zinc chromate | 1 | — |
| Curing agent | 4 | 3 |
| Polyvinylidene fluoride powder | 12 | — |
| Polyamide powder | — | 4 |
| Ethyl ether of ethylene glycol acetate | 10 | 13 |
| Aromatic hydrocarbon | 15 | 10 |
| Methylethyl ketone | 6 | 10 |
| Cyclohexanone | — | 10 |

The resulting coating compositions were applied to hot-galvanized steel in a thickness of 5 µm (Example 10) and 10 µm (Example 11) [in the cured state] and cured as described in the Examples 1—4.

Both coatings displayed a flexibility T0 measured in accordance with the T-bend test mentioned in the Examples 1—4. Further, the coatings showed a better resistance to corrosion, better adhesion and higher resistance to solvents than the coatings without the polyvinylidene fluoride powder or polyamide powder.

**Claims**

1. A pigment-containing, liquid coating composition based on a polymer as binder, characterized in that the binder is a block copolymer of the formula $A—(B—A)_m$ or $B—(A—B)_n$, wherein m and n are numbers in the range of 1 to 20, which block copolymer is built up of one or more blocks A of a carboxylic polyester resin from terephthalic acid and/or isophthalic acid, a branched or non-branched dihydroxy compound having 2—8 carbon atoms and optionally a tri- or polyfunctional hydroxy compound and/or a tri- or polyfunctional carboxyl compound in an amount not higher than 10 mole %, based on the total amount of hydroxy or carboxyl compounds polymerized by condensation, said polyester resin having an acid number of 10—140 and a number average molecular weight of 800—10000, and of one or more blocks B of an epoxy resin having an epoxy functionality of 1,5—2,5 and an epoxy equivalent weight of 100—2000, the composition also containing a curing agent for the hydroxyl group-containing block copolymer, said

curing agent being a blocked or non-blocked isocyanurate compound, a blocked or non-blocked aliphatic, cycloaliphatic or aromatic di-, tri- or polyvalent isocyanate, an aminoplast and/or a phenol resin.

2. A coating composition according to claim 1, characterized in that the polyester resin is also built up from a tri- or polyfunctional hydroxy compound and/or of a tri- or polyfunctional carboxyl compound in an amount not higher than 8 mole %, based on the total amount of hydroxy or carboxyl compounds polymerized by condensation.

3. A coating composition according to claim 1, characterized in that the polyester resin has an acid number in the range of from 20 to 110.

4. A coating composition according to claim 1, characterized in that the polyester resin has a number average molecular weight in the range of from 1000 to 6000.

5. A coating composition according to claim 1, characterized in that the polyester resin has a hydroxyl number not higher than 2.

6. A coating composition according to claim 1, characterized in that the epoxy resin has an epoxy functionality in the range of from 1,8 to 2,2.

7. A coating composition according to claim 1, characterized in that the epoxy resin has an epoxy equivalent weight in the range of from 100 to 700.

8. A coating composition according to claim 1, characterized in that the epoxy resin has a number average molecular weight in the range of from 150 to 1250.

9. A coating composition according to claim 1, characterized in that the epoxy resin is a compound of the general formula

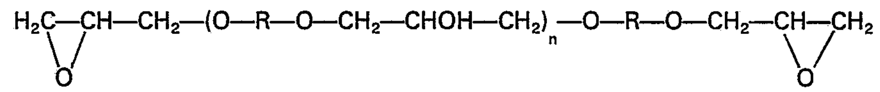

wherein R represents an aliphatic, cycloaliphatic or aromatic group and n is a number in the range of from 0 to 50, or an adduct thereof with a (cyclo)aliphatic or heterocyclic diamine.

10. A coating composition according to claim 9, characterized in that the epoxy resin is a diglycidyl ether based on bis-(4-hydroxyphenyl)2,2-propane.

11. A coating composition according to claim 9, characterized in that the epoxy resin is a compound of the general formula wherein n is a number in the range of from 0 to 10.

12. A coating composition according to claim 9, characterized in that the epoxy resin is an adduct with a di-secondary amine.

13. A coating composition according to claim 9, characterized in that the epoxy resin is an adduct with piperazine.

14. A coating composition according to claim 1, characterized in that the block copolymer has a number average molecular weight in the range of from 3000 to 20 000.

15. A coating composition according to claim 1, characterized in that the block copolymer has a number average molecular weight in the range of from 5000 to 18 000.

16. A coating composition according to claim 1, characterized in that the block copolymer has an acid number not higher than 15.

17. A coating composition according to claim 1, characterized in that the block copolymer has an acid number of 0 to 10.

18. A coating composition according to claim 1, characterized in that the curing agent is present in an amount such that the molar ratio of the reactive groups of the curing agent to the reactive groups of the block copolymer is in the range of from 0,1 to 1,7.

19. A coating composition according to claim 1, characterized in that the weight ratio of pigment to block copolymer and the curing agent is in the range of from 0,05 to 19.

20. A process for coating a substrate of a metal, an elastomer, a synthetic material or wood, characterized in that a coating composition according to any one of the claims 1 to 20 is applied to the substrate and cured.

**Patentansprüche**

1. Eine Pigment enthaltende, flüssige Überzugszusammensetzung basierend auf einem Polymer als Bindemittel, dadurch gekennzeichnet, daß das Bindemittel ein Blockcopolymer der Formel $A—(B—A)_m$ oder $B—(A—B)_n$ ist, in denen m und n Zahlen im Bereich von 1 bis 20 sind, wobei das Blockcopolymer aus einem oder mehreren Blöcken A eines carboxylischen Polyesterharzes aus Terephthalsäure und/oder Isophthalsäure, einer verzweigten oder unverzweigten Dihydroxyverbindung mit 2 bis 8 Kohlenstoffatomen und gegebenenfalls einer tri- oder polyfunktionellen Hydroxyverbindung und oder einer tri- oder polyfunktionellen Carboxyverbindung in einer Menge nicht höher als 10 Molprozent, bezogen auf die Gesamtmenge der durch Kondensation polymerisierten Hydroxy- oder Carboxyverbindungen, wobei das Polyesterharz eine Säurezahl von 10—140 und ein Zahlenmittel Molekulargewicht von 800 bis 10 000 hat, und aus einem oder mehreren Blöcken B eines Epoxyharzes mit einer Epoxyfunktionalität von 1,5 bis 2,5 und einem Epoxyäquivalenzgewicht von 100 bis 2000 aufgebaut

ist, und daß die Zusammensetzung auch ein Härtemittel für das Hydroxylgruppen enthaltende Blockcopolymer enthält, wobei das Härtemittel eine blockierte oder nicht blockierte Isocyanuratverbindung, ein blockiertes oder nicht blockiertes aliphatisches, cycloaliphatisches oder aromatisches Di-, Tri- oder mehrwertiges Isocyanat, ein Aminoplast und/oder Phenolharz ist.

2. Eine Überzugszusammensetzung nach Anspruch 1, dadurch gekennzeichnet, daß das Polyesterharz auch aus einer tri- oder polyfunktionellen Hydroxyverbindung und/oder einer tri- oder polyfunktionellen Carboxyverbindung in einer Menge nicht höher als 8 Molprozent aufgebaut ist, bezogen auf die Gesamtmenge der durch Kondensation polymerisierten Hydroxy- oder Carboxyverbindungen.

3. Eine Überzugszusammensetzung nach Anspruch 1, dadurch gekennzeichnet, daß das Polyesterharz eine Säurezahl im Bereich von 20 bis 110 hat.

4. Eine Überzugszusammensetzung nach Anspruch 1, dadurch gekennzeichnet, daß das Polyesterharz ein Zahlenmittel- Molekulargewicht im Bereich von 1000 bis 6000 hat.

5. Eine Überzugszusammensetzung nach Anspruch 1, dadurch gekennzeichnet, daß das Polyesterharz eine Hydroxylzahl nicht höher als 2 hat.

6. Eine Überzugszusammensetzung nach Anspruch 1, dadurch gekennzeichnet, daß das Epoxyharz eine Epoxyfunktionalität im Bereich von 1,8 bis 2,2 hat.

7. Eine Überzugszusammensetzung nach Anspruch 1, dadurch gekennzeichnet, daß das Epoxyharz ein Epoxyäquivalentgewicht im Bereich von 100 bis 700 hat.

8. Eine Überzugszusammensetzung nach Anspruch 1, dadurch gekennzeichnet, daß das Epoxyharz ein Zahlen- Molekulargewicht im Bereich von 150 bis 1250 hat.

9. Eine Überzugszusammensetzung nach Anspruch 1, dadurch gekennzeichnet, daß das Epoxyharz eine Verbindung der allgemeinen Formel

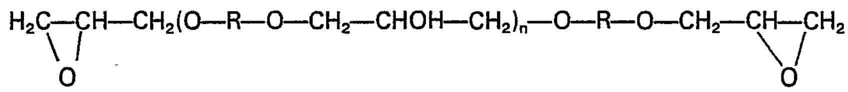

in der R eine aliphatische, cycloaliphatische oder aromatische Gruppe darstellt und n eine Zahl im Bereich von 0 bis 50 ist, oder deren Addukt mit einem (cyclo)aliphatischen oder heterocyclischen Diamin ist.

10. Eine Überzugszusammensetzung nach Anspruch 9, dadurch gekennzeichnet, daß das Epoxyharz ein auf Bis-(4-hydroxyphenyl)-2,2-propan basierender Diglycidyläther ist.

11. Eine Überzugszusammensetzung nach Anspruch 9, dadurch gekennzeichnet, daß das Epoxyharz eine Verbindung der allgemeinen Formel ist, in der n eine Zahl im Bereich von 0 bis 10 ist.

12. Eine Überzugszusammensetzung nach Anspruch 9, dadurch gekennzeichnet, daß das Epoxyharz ein Addukt mit einem di-sekundären Amin ist.

13. Eine Überzugszusammensetzung nach Anspruch 9, dadurch gekennzeichnet, daß das Epoxyharz ein Addukt mit Piperazin ist.

14. Eine Überzugszusammensetzung nach Anspruch 1, dadurch gekennzeichnet, daß das Blockcopolymer ein Zahlenmittel- Molekulargewicht im Bereich von 3000 bis 20 000 hat.

15. Eine Überzugszusammensetzung nach Anspruch 1, dadurch gekennzeichnet, daß das Blockcopolymer ein Zahlenmittel- Molekulargewicht im Bereich von 5000 bis 18 000 hat.

16. Eine Überzugszusammensetzung nach Anspruch 1, dadurch gekennzeichnet, daß das Blockcopolymer eine Säurezahl nicht höher als 15 hat.

17. Eine Überzugszusammensetzung nach Anspruch 1, dadurch gekennzeichnet, daß das Blockcopolymer eine Säurezahl von 0 bis 10 hat.

18. Eine Überzugszusammensetzung nach Anspruch 1, dadurch gekennzeichnet, daß das Härtemittel in einer Menge vorhanden ist, so daß das Molverhältnis der reaktiven Gruppen des Härtemittels zu den reaktiven Gruppen des Blockcopolymers im Bereich von 0,1 bis 1,7 liegt.

19. Eine Überzugszusammensetzung nach Anspruch 1, dadurch gekennzeichnet, daß das Gewichtsverhältnis von Pigment zu Blockcopolymer und Härtemittel im Bereich von 0,05 bis 19 liegt.

20. Ein Verfahren zum Überziehen eines Substrats aus einem Metall, einem Elastomeren, einem synthetischen Material oder Holz, dadurch gekennzeichnet, daß eine Überzugszusammensetzung nach irgendeinem der Ansprüche 1 bis 19 auf das Substrat aufgebracht und gehärtet wird.

**Revendications**

1. Une composition de revêtement liquide contenant un pigment à base d'un polymère comme liant, caractérisée en ce que le liant est un copolymère séquencé de formule $A—(B—A)_m$ ou $B—(A—B)_n$, où m et n sont des nombres dans la gamme de 1 à 20, lequel copolymère séquencé est constitué d'un ou plusieurs blocs A d'une résine de polyester carboxylique d'acide téréphtalique et/ou d'acide isophtalique, d'un composé dihydroxylé ramifié ou non ramifié ayant 2 à 8 atomes de carbone et éventuellement d'un composé hydroxylé tri- ou poly-fonctionnel et/ou d'un composé carboxylé tri- ou poly-fonctionnel en une quantité ne dépassant pas 10 % molaires par rapport à la quantité totale des composés hydroxylés ou carboxylés polymérisés par condensation, ladite résine de polyester ayant un indice d'acide de 10 à 140 et une moyenne numérique du poids moléculaire de 800 à 10 000 et d'un ou plusieurs blocs B d'une résine

époxy ayant une fonctionnalité époxy de 1,5—2,5 et un poids équivalent en époxy de 100 à 2 000, la composition contenant également un agent de durcissement pour le copolymère séquencé contenant des groupes hydroxyles, ledit agent de durcissement étant un composé isocyanurate bloqué ou non bloqué, un isocyanate di-, tri- ou poly-valent aliphatique, cycloaliphatique ou aromatique, un aminoplaste et/ou une résine phénolique.

2. Une composition de revêtement selon la revendication 1, caractérisée en ce que la résine de polyester est également constitué d'un composé hydroxylé tri- ou poly-fonctionnel et/ou d'un composé carboxylé tri- ou poly-fonctionnel en une quantité ne dépassant pas 8 % molaires par rapport à la quantité totale des composés hydroxylés ou carboxylés polymérisés par condensation.

3. Une composition de revêtement selon la revendication 11, caractérisée en ce que la résine de polyester a un indice d'acide dans la gamme de 20 à 110.

4. Une composition de revêtement selon la revendication 1, caractérisée en ce que la résine de polyester a une moyenne numérique du poids moléculaire dans la gamme de 1 000 à 6 000.

5. Une composition de revêtement selon la revendication 1, caractérisée en ce que la résine de polyester a un indice d'hydroxyle ne dépassant pas 2.

6. Une composition de revêtement selon la revendication 1, caractérisée en ce que la résine époxy a une fonctionnalité époxy dans la gamme de 1,8 à 2,2.

7. Une composition de revêtement selon la revendication 1, caractérisée en ce que la résine époxy a un poids équivalent en époxy dans la gamme de 100 à 700.

8. Une composition de revêtement selon la revendication 1, caractérisée en ce que la résine époxy a une moyenne numérique du poids moléculaire dans la gamme de 150 à 1 250.

9. Une composition de revêtement selon la revendication 1, caractérisée en ce que la résine époxy est un composé de formule générale

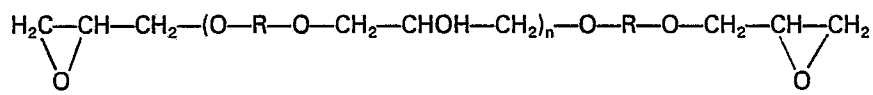

dans laquelle R représente un groupe aliphatique, cycloaliphatique ou aromatique et n est un nombre dans la gamme de 0 à 50, ou un produit d'addition de celui-ci avec une diamine (cyclo)aliphatique ou hétérocyclique.

10. Une composition de revêtement selon la revendication 9, caractérisée en ce que la résine époxy est un éther diglycidylique à base de bis(4-hydroxyphényl)-2,2-propane.

11. Une composition de revêtement selon la revendication 9, caractérisée en ce que la résine époxy est un composé de la formule générale où n est un nombre dans la gamme de 0 à 10.

12. Une composition de revêtement selon la revendication 9, caractérisée en ce que la résine époxy est un produit d'addition avec une amine disecondaire.

13. Une composition de revêtement selon la revendication 9, caractérisée en ce que la résine époxy est un produit d'addition avec la pipérazine.

14. Une composition de revêtement selon la revendication 1, caractérisée en ce que le copolymère séquencé a une moyenne numérique du poids moléculaire dans la gamme de 3 000 à 20 000.

15. Une composition de revêtement selon la revendication 1, caractérisée en ce que le copolymère séquencé à une moyenne numérique du poids moléculaire dans la gamme de 5 000 à 18 000.

16. Une composition de revêtement selon la revendication 1, caractérisée en ce que le copolymère séquencé a un indice d'acide ne dépassant pas 15.

17. Une composition de revêtement selon la revendication 1, caractérisée en ce que le copolymère séquencé a un indice d'acide de 0 à 10.

18. Une composition de revêtement selon la revendication 1, caractérisée en ce que l'agent de durcissement est présent en une quantité telle que le rapport molaire des groupes réactifs de l'agent de durcissement aux groupes réactifs du copolymère séquencé est dans la gamme de 0,1 à 1,7.

19. Une composition de revêtement selon la revendication 1, caractérisée en ce que la rapport pondéral du pigment au copolymère séquencé et à l'agent de durcissement est dans la gamme de 0,05 à 19.

20. Un procédé pour revêtir un subjectile fait d'un métal, d'un élastomère, d'une matière synthétique ou de bois, caractérisé en ce qu'on applique au subjectile une composition de revêtement selon l'une quelconque des revendications 1 à 20 et on durcit.